Europäisches Patentamt

European Patent Office

Office européen des brevets

(19)

(11) EP 0 692 762 B1

(12) **FASCICULE DE BREVET EUROPEEN**

(45) Date de publication et mention
de la délivrance du brevet:
**18.11.1998 Bulletin 1998/47**

(51) Int Cl.⁶: **G06F 7/52**

(21) Numéro de dépôt: **95470026.6**

(22) Date de dépôt: **06.07.1995**

(54) **Circuit logique de multiplication parallèle**

Logikschaltung zur parallelen Multiplikation

Parallel multiplication logical circuit

(84) Etats contractants désignés:
**DE FR GB IT**

(30) Priorité: **15.07.1994 FR 9408950**

(43) Date de publication de la demande:
**17.01.1996 Bulletin 1996/03**

(73) Titulaire: **SGS-THOMSON MICROELECTRONICS S.A.**
**94250 Gentilly (FR)**

(72) Inventeur: **Parant, Philippe,**
**Cabinet Ballot Schmit**
**F-57000 Metz (FR)**

(74) Mandataire: **Schmit, Christian Norbert Marie**
**Cabinet Ballot-Schmit,**
**18 Place du Forum**
**57000 Metz (FR)**

(56) Documents cités:
**EP-A- 0 276 520        EP-A- 0 545 654**

- **ELECTRO 84. ELECTRONIC SHOW AND CONVENTION, BOSTON, MA, USA, 15-17 MAY 1984, 1984, LOS ANGELES, CA, USA, ELECTRON. CONVENTIONS, USA, pages 9/2/1-9, RICHARD M B ET AL 'FAST-LSI, a second generation advanced Schottky technology'**
- **IEEE JOURNAL OF SOLID-STATE CIRCUITS, vol. 27, no. 9, NEW YORK US, pages 1229-1235, XP 000311186 G. GOTO ET AL. 'A 54x54-b Regularly Structured Tree Multiplier'**

**Description**

La présente invention concerne un circuit logique de multiplication parallèle.

Un objectif principal de l'évolution des technologies appliquées dans les circuits intégrés est d'augmenter les vitesses de traitement. Un domaine plus particulièrement concerné par cette évolution est le traitement numérique de données, notamment par les micro-contrôleurs ou micro-processeurs et les processeurs de traitement du signal (ou DSP, de "Digital Signal Processor"). Souvent, ces circuits comportent, entre autres, des circuits de multiplication qui permettent d'effectuer des traitements sur des séries de signaux logiques X et Y et de produire une série de signaux logiques de sortie P telles que ces séries de signaux (physiques) sont représentatives de données binaires notées respectivement $X_d$, $Y_d$, et $P_d$ avec :

- $X_d$ et $Y_d$ des opérandes binaires (un multiplicande $X_d = (x_{d,n-1}, x_{d,n-2}, ..., x_{d,1}, x_{d,0})$ et un multiplicateur $Y_d = (y_{d,n-1}, y_{d,n-2}, ..., y_{d,1}, y_{d,0})$) à n bits, n étant un entier,
- $P_d$ résultat binaire codé sur 2 * bits ($P_d = X_d * Y_d = (p_{d,2n-1}, p_{d,2n-2}, ..., p_{d,1}, p_{d,0})$).

Typiquement, n est un entier pair, et le plus souvent c'est une puissance de 2, par exemple 16.

La technique basique de la multiplication binaire est de calculer :

$P_d = X_d * Y_d = \Sigma_i P_{d,i} * 2^i$ avec $P_{d,i} = X_d * y_{d,i}$, en notant $y_{d,i}$ le (i+1)$^{ième}$ bit du multiplicateur, i entier de 0 à n-1. $P_{d,i}$, donnée binaire codée sur n bits ($P_{d,i} = 0$ ou $X_d$), est communément appelé produit partiel.

Il existe des techniques permettant de réduire le nombres de produits partiels afin de diminuer le temps de traitement en diminuant le nombre d'additions de produits partiels.

Une technique particulièrement intéressante consiste à mettre en oeuvre un décodage dit de Booth (voir Booth, A.D., "A signed binary multiplication technique", Quart. J.Mech. Appl., 4, Pt 2, pp. 236-240, 1951) qui consiste à raisonner non pas sur les bits du multiplicateur pris successivement mais de les regrouper entre eux.

En effet, on peut par exemple écrire :

$Y_d = \Sigma_j j(y_{d,j-1} + y_{d,j} - 2 * y_{d,j+1}) * 2^j$, avec j entier pair compris entre 0 et n-1, et $y_{d,-1} = y_{d,n} = 0$ (regroupement par trois centré sur les bits de rang pair du multiplicateur, avec un recouvrement de 1 entre deux regroupements correspondants à des rangs j prenant deux valeurs entières paires voisines).

Le calcul de $P_d = X_d * Y_d$ se ramène alors à l'addition de n/2 produits partiels $P'_{d,j}$ (si n est pair, ce qui est toujours le cas en pratique), avec :

$$P'_{d,j} = (y_{d,j-1} + y_{d,j} - 2 * y_{d,j+1}) * X_d,$$

et

$$P_d = \Sigma_j (S_{d,j} \& P'_{d,j}) * 2^j.$$

On aura $P'_{d,j} = 0, \pm X_d$ ou $\pm 2X_d$, suivant les valeurs des bits $y_{d,j-1}$, $y_{d,j}$ et $y_{d,j+1}$.

& représente l'opérateur de concaténation.

$S_{d,j}$ est une donnée binaire codée sur (n - j) bits dits d'extension de signe, associée au produit partiel $P'_{d,j}$, telle que :

- si les produits partiels $P'_{d,j}$ sont de signe identique à celui du multiplicande ($P'_{d,j} = 0$, $X_d$ ou $2X_d$) on positionne classiquement ces (n - j) bits à 0,
- si les produits partiels sont de signe opposé ($P'_{d,j} = -X_d$ ou $-2X_d$) alors on positionne tous ces bits à 1.

Ce calcul revient donc formellement à considérer des produits partiels $P''_{d,j}$ codés sur 2 * n bits $p_{d,j,0}$ à $p_{d,j,2n-1}$ tels que:

- $P_d = \Sigma_j P''_{d,j}$,
- les bits $p_{d,j,0}$ à $p_{d,j,j-1}$ sont à 0, pour $j \geq 2$,
- les bits $p_{d,j,j}$ à $p_{d,j,j+n-1}$ représentent $P'_{d,j}$,
- les bits $p_{d,j,j+n}$ à $p_{d,j,2n-1}$ représentent $S_{d,j}$.

On notera qu'en pratique on peut commencer le décodage de Booth à partir d'un bit de rang quelconque du multiplicateur et se contenter de produits partiels classiques (c'est à dire de la forme $X_d * y_{d,i}$) pour les bits de rangs inférieurs. On aurait aussi pu considérer un regroupement de plus de trois bits, dont l'inconvénient est de produire éventuellement des produits partiels de type $\pm 3X_d$. Cela complique le circuit et augmente sensiblement le temps de traitement.

Typiquement, un circuit permettant de mettre en oeuvre un traitement de signaux correspondant au calcul ci-dessus comprendra :

- un décodeur recevant la série de signaux Y et produisant des signaux de sélection,
- un générateur de produits partiels recevant la série de signaux X en entrée, comprenant :
- des moyens pour produire des séries de signaux représentatives de 0, $\pm X_d$, $\pm 2X_d$,
- un circuit de multiplexage recevant d'une part les séries de signaux représentatives de 0, $\pm X_d$, $\pm 2X_d$ en entrée et d'autre part les signaux de sélection, et fournissant des séries de signaux logiques $P'_j$ représentatives des produits partiels $P'_{d,j}$ en sortie, tels que définis ci-dessus pour un regroupement trois par trois des bits du multiplicateur (les signaux de sélection, en pratique, sont des signaux de commande de multiplexeurs),
- des moyens d'extension de signe recevant les séries $P'_j$ et les signaux de sélection et produisant des séries de signaux logiques $P''_j$ représentatives des données $P''_{d,j}$ (en pratique les séries $P''_j$ comprendront $(2 * n - j)$ signaux, les bits $p_{d,j,0}$ à $p_{d,j,j-1}$ étant toujours nuls et n'influençant donc pas le résultat),
- un circuit de calcul recevant les séries $P''_j$ et produisant la série P de $(2 * n)$ signaux logiques, par réduction du nombre de séries $P''j$ à l'aide de circuits d'addition composés d'additionneurs élémentaires.

Un circuit tel que décrit précédemment est dévoilé par le document EP-A-0 545 654.

Un multiplieur parallèle avec encodeur de Booth et arbre de Wallace pour la somme des produits partiels est aussi décrit dans l'article 'Electro 84. Electronic show and convention' 15-17 Mai 1984 pages 9/2/1-9.

On pourra très facilement étendre la méthode générale ci-dessus de manière à proposer un choix entre arithmétique signée et non signée. Classiquement si les opérandes sont relatives (positives ou négatives, en arithmétique signée), la valeur de leur bit de poids le plus fort indique quel est leur signe (généralement négatif si ce bit est à 1, et positif si ce bit est à 0).

Bien entendu, on devra disposer, dans le circuit de mise en oeuvre de la multiplication, de signaux logiques permettant alors de savoir quel est le choix retenu. Il suffit pour cela de définir deux variables binaires codées sur un bit, ci-après notées tcx et tcy, dont les valeurs définiront le caractère signé ou non des opérandes (par exemple 1 si les opérandes sont signées et 0 dans le cas contraire).

On prendra alors en compte :

- la variable tcy associée au multiplicateur dans le regroupement des bits du multiplicateur comme si le multiplicateur était codé sur n+1 bits, le bit de poids le plus fort étant tcy, et
- la variable tcx associée au multiplicande pour formater le résultat $P_d$ de l'addition finale.

En pratique cela nécessite, en cas de regroupement par trois centrés sur les bits de rang pair du multiplicateur, de rajouter une cellule de décodage supplémentaire pour calculer $y_{d,j-1} + y_{d,j} - 2 * y_{d,j+1}$, tels que $j = n$, $y_{d,j-1} = y_{d,n-1}$, $y_{d,j} = tcy$, et $y_{d,j+1} = 0$.

Il sera donc dans ce cas plus judicieux d'effectuer un regroupement centré sur les bits de rang impair. En effet on peut écrire $Y_d = - y_{d,0} + \Sigma_j (y_{d,j-1} + Y_{d,j} - 2 * y_{d,j+1}) * 2^j$, avec j entier impair compris entre 1 et n-1, et $y_{d,n} = tcy$. On produira, en appliquant la formule ci-dessus, n/2 (n pair) produits partiels impliquant un décodage, et un produit partiel classique égal à $-X_d * y_{d,0}$.

Par ailleurs on pourra vouloir réaliser des multiplications sur des nombres de type fractionnel pur, c'est à dire compris entre 0 et 1.

On pourra aussi mettre en oeuvre éventuellement un traitement d'arrondissement.

On disposera alors classiquement en sortie d'un circuit de formatage recevant en entrée une série de signaux logiques $P_f$ représentative d'une donnée binaire $P_{d,f}$, résultant de l'addition des produits partiels $P''_j$ et d'un formatage (prise en compte de tcx), et des signaux de commande et fournissant la série P telle que :

- en notant & l'opérateur de concaténation, MSB et LSB les n bits de poids le plus fort et les n bits de poids les plus faible du résultat $P_{d,f}$ de l'addition des produits partiels, on aura au choix:

- $P_d = MSB \& LSB$, (en arithmétique non signée, et signée sur des nombres entiers).
- $P_d = (MSB \& LSB) * 2$ en arithmétique signée et fractionnelle. En effet on pratiquera avantageusement un décalage vers la gauche d'un rang permettant d'augmenter d'une unité la précision dans la partie fractionnelle. Les deux bits de rang 2n-2 et 2n-1 de $P_{d,f}$ représentent en effet deux bits de signe, ce qui n'apporte pas plus d'information qu'un seul. En pratique, après décalage, le bit de poids le plus faible sera toujours positionné à 0. Pour les entiers il est peu conseillé d'agir ainsi dans la mesure où un tel décalage équivaut à multiplier par deux le résultat final après formatage, c'est à dire à modifier sensiblement ce résultat.

- $P_d = (PE + PFr * 2^{r+1})$ & $0_{0..r}$, en arithmétique arrondie, qui consiste à positionner les bits de poids les plus faibles du rang 0 à un rang r à 0 (r entier naturel), et à additionner le bit de rang r au bit de rang r+1. On note PE la partie du résultat final après formatage comprenant les bits de rang r+1 à 2n-1, PF la partie du résultat formée des bits de rang 0 à r, r le rang du bit de poids le plus fort de la partie PF, PFr la valeur du bit de rang r du résultat à arrondir, et $0_{0..r}$ une donnée binaire codée sur r+1 bits dont tous les bits sont à 0. On notera qu'en mixant le mode ci-dessus à celui-ci (arithmétique fractionnelle arrondie, les opérandes étant signées), on calcule en pratique :

$$P_d = (((PE \text{ \& } PF)*2) + PFr * 2^{r+1}) \text{ \& } 0_{0..r},$$ PFr étant bien sûr la valeur du bit de rang r de $P_{d,f}$ après décalage, c'est à dire la valeur du bit de rang r-1 avant décalage.

Un problème lié au traitement d'arrondissement est la nécessité de disposer d'un incrémenteur volumineux en sortie pour réaliser l'arrondissement, cet incrémenteur devant traiter (2 * n - r - 1) signaux (du fait de la propagation de retenue jusqu'au bit de poids le plus fort de la donnée $P_d$).

L'inventeur a tout d'abord cherché à réduire le nombre de bits d'extension de signe, et donc le nombre de signaux représentatifs de ces bits, à trois maximum par produit partiel, tels que cette extension de signe soit codée sur les bits de rang j+n à j+n+2, tout en tenant compte également du caractère signé ou non du multiplicande. On remarquera que l'on diminue ainsi le nombre d'additionneurs élémentaires dans les circuits d'addition (les bits de rang j+n+3 à 2n-1 des produits partiels $P''_{d,j}$ étant toujours identiquement nuls, donc ne modifiant pas le résultat de l'addition des produits partiels). On réduit également le temps de traitement.

En effet, soit i de 0 à n, $\Sigma_i q^i = (1-q^{n+1})/(1-q)$.

Si q = 2, alors $\Sigma_i q^i = 2^{n+1} - 1$.

L'inventeur a montré qu'en notant :

- l le nombre de produits partiels $P''_{d,j}$,
- j+n-1 le rang de poids le plus fort des produits partiels non représentatif du signe,
- $S_l$ les n-j bits d'extension de signe d'un produit partiel, tous ces bits de rang n+j à 2n-1 étant dans le même état logique 0 ou 1,

alors la somme S des bits d'extension de signe de l'ensemble des produits partiels peut se mettre sous la forme $S = \Sigma_l (\Sigma_t S_l * 2^t)$, t entier de n+j à 2n-1, ou encore

$$S = \Sigma_l S_l (2^{2n} - 2^{j+n})$$

On peut éliminer le premier terme si on code les produits partiels sur 2n bits. Il reste donc :

$$S = -\Sigma_l S_l * 2^{j+n} = \Sigma_l (/S_l + 1) * 2^{j+n}$$

Dans le cas d'un regroupement par trois, on en déduit que la donnée binaire formée par les n-j bits d'extension de signe de rang j+n à 2n-1 des produits partiels peut se ramener à une donnée binaire codée sur trois bits $ES_{d,j} = (es_{d,j,2}, es_{d,j,1}, es_{d,j,0})$, et coder les bits d'extension de signe des produits partiels sur leurs bits de rang j+n à j+n+2 avec :

- si le produit partiel est obtenu de la manière classique, à partir d'un calcul de type $X_d * y_{d,i}$ :

$ES_{d,j} = (0, 0, 1)$ si tcx $= y_{d,i} = x_{d,n-1} = 1$, et $ES_{d,j} = (0, 1, 0)$ sinon,

- si le produit partiel est obtenu à partir d'un regroupement par trois suivant la méthode de Booth:

$$ES_{d,j} = (0, 1, 1) \text{ si } P'_{d,j} = 0,$$

$$ES_{d,j} = (0, 1, 1) \text{ si tcx} = 0 \text{ et } P'_{d,j} = X_d,$$

$$ES_{d,j} = (0, 1, 0) \text{ si tcx} = 0 \text{ et } P'_{d,j} = -X_d \text{ (ou } /X_d),$$

$$ES_{d,j} = (x_{d,n-1}, /x_{d,n-1}, /x_{d,n-1}) \text{ si tcx} = 0 \text{ et } P'_{d,j} = 2X_d,$$

$$ES_{d,j} = (0, /x_{d,n-1}, x_{d,n-1}) \text{ si tcx} = 0 \text{ et } P'_{d,j} = -2X_d \text{ (ou } /2X_d),$$

$$ES_{d,j} = (0, 1, /x_{d,n-1}) \text{ si tcx} = 1 \text{ et } P'_{d,j} = X_d \text{ ou } 2X_d,$$

$$ES_{d,j} = (0, 1, x_{d,n-1}) \text{ si tcx} = 1 \text{ et } P'_{d,j} = -X_d \text{ (ou } /X_d) \text{ ou } -2X_d \text{ (ou } 2/X_d).$$

La prise en compte de tcx dans la réduction du nombre de bits de signe présente l'avantage d'éliminer un traitement du résultat final de l'addition, comme c'était le cas auparavant.

L'inventeur propose de tirer partie de la réduction du nombre de signaux d'extension de signe pour effectuer l'opération d'incrémentation de la fonction arrondi (correspondant à l'hypothèse que le bit de rang r du résultat final est à 1) dans les circuits d'addition, de manière à diminuer la taille de l'incrémenteur effectuant cette opération (ce qui revient formellement à limiter la propagation de la retenue dans l'arrondissement de la donnée de sortie).

Au niveau du traitement de la série de signaux de sortie P, on pourra ainsi se limiter à réaliser une opération du type $P_d = PE \& 0_{0..r}$ (sans décalage) ou $P_d = ((PE \& PF) * 2) \& 0_{0..r}$ (avec décalage).

Comme on ne connaît pas à priori quelle sera la valeur du signal de rang r du résultat final avant arrondissement, l'invention propose d'additionner systématiquement $2^r$ (sans décalage) ou $2^{r-1}$ (avec décalage) à l'un des produits partiels.

En effet, en considérant la formule $P_d = (PE + PFr * 2^{r+1}) \& 0_{0..r}$ (sans décalage) :

- si le bit PFr de rang r du résultat final est normalement à 0, la partie PE reste identique avant et après concaténation avec $0_{0..r}$. Si on a additionné $2^r$ à un produit partiel et qu'on utilise la formule $P_s = PE \& 0_{0..r}$, on obtient donc le même résultat.
- si le bit PFr de rang r du résultat final est normalement à 1, la partie PE est incrémentée de 1 avant concaténation avec $0_{0..r}$. Si on a additionné $2^r$ à un produit partiel et qu'on utilise la formule $P = PE \& 0_{0..r}$, on obtient également le même résultat, l'incrémentation étant réalisée par avance dans le circuit réalisant l'addition des produits partiels.

L'invention propose de réaliser l'opération consistant à additionner entre eux les données $(0, 0,...,1,0)$ et $(ex_{d,j,2}, ex_{d,j,1}, ex_{d,j,0}, p_{d,j,j+n-1},..., p_{d,j,r}, p_{d,j,r-1})$, déduite d'un des produits partiels, de dimension j+n+4-r, et de remplacer cette dernière donnée par le résultat de cette opération, la retenue étant positionnée au rang j+n+3. On pratique donc une modification d'un des produits partiels avant sa prise en compte dans le circuit réalisant l'addition des produits partiels.

Si on souhaite, en arithmétique fractionnelle avec opérandes signées, procéder à un décalage vers la gauche afin d'améliorer la précision on veillera bien sûr à modifier le premier vecteur de manière à additionner le vecteur $(0, 0,..., 0, 1)$ à $(ex_{d,j,2}, ex_{d,j,1}, ex_{d,j,0}, p_{d,j,j+n-1},..., p_{d,j,r}, p_{d,j,r-1})$.

Le mieux est de procéder à cette opération d'incrémentation sur le produit partiel ayant le plus grand nombre de bits de poids forts toujours à zéro, afin de limiter au strict minimum la propagation de la retenue.

Par ailleurs, on remarquera qu'en considérant un produit partiel obtenu selon la méthode classique $(X_d * y_{d,i})$ on peut réduire la taille de l'incrémenteur, la réduction du nombre de bits d'extension de signe produisant alors un bit de rang j+n+2 toujours nul. On pourra alors additionner des données codées sur j+n+3-r bits.

Ainsi, l'invention concerne un circuit logique de multiplication parallèle recevant une première et une deuxième séries de n signaux logiques, représentatifs de deux données binaires, un multiplicande et un multiplicateur, codées sur n bits, n nombre entier, et produisant une série de 2 * n signaux logiques de sortie représentatifs d'une donnée binaire de sortie codée sur 2 * n bits, comprenant un circuit produisant des signaux logiques de sélection à partir de la deuxième série de signaux, un générateur de produits partiels produisant des séries de signaux logiques intermédiaires par combinaison de la première série de signaux et des signaux de sélection, un circuit de calcul et de formatage recevant les séries de signaux intermédiaires, produisant la série de signaux de sortie et comportant des circuits d'addition recevant des séries de signaux d'entrée et produisant des séries de signaux de sortie, les circuits d'addition étant composés d'additionneurs élémentaires à plusieurs entrées montés en parallèle, les circuits d'addition formant une structure de type arbre de Wallace, caractérisé en ce que le circuit de calcul et de formatage comporte un circuit d'incrémentation modifiant une des séries de signaux d'entrée par l'addition anticipée d'un bit d'arrondi afin de limiter une propagation de retenue, le bit d'arrondi étant positionné en fonction de signaux de commande représentatifs des formats des première et deuxième séries et de la série de signaux logiques de sortie.

Un deuxième problème est la présence d'incrémenteurs à n bits pour produire les séries de signaux représentatives de $-X_d$ et $-2X_d$ ($-X_d = /X_d + 2^0$), si on utilise un décodage de Booth pour produire les produits partiels.

En ce qui concerne cet inconvénient, l'invention propose de modifier le générateur de produits partiels en produisant des séries de signaux représentatives de 0, $X_d$, $/X_d$, $2X_d$, $/(2X_d)$, et de réaliser l'incrémentation correspondant à la production de $-X_d$ et $-2X_d$ à partir de $/X_d$ et $/(2X_d)$ (notée ci-après $/2X_d$) au moment du traitement correspondant à l'addition des produits partiels.

Comme on l'a vu, les produits partiels $P''_{d,j}$ ont leurs j bits de poids faible $p_{d,j,0}$ à $p_{d,j,j-1}$ à l'état 0. L'incrémentation à effectuer, si ces produits partiels sont de signe opposé au multiplicande, s'assimile à additionner $2^j$ à ces produits partiels en considérant que leurs bits $p_{d,j,j}$ à $p_{d,j,j+n-1}$ représentent $/X_d$ ou $/2X_d$. L'invention propose de modifier les produits partiels $P''_{d,j}$ tels que définies à l'origine en considérant des produits partiels de la forme $P''_{d,j} + \Sigma_k (\alpha_k * 2^k)$, avec k indice entier de 0 à j-1, et $\alpha_k$ coefficient égal à 0 ou 1, les bits $p_{d,j,j}$ à $p_{d,j,j+n-1}$ représentant 0, $X_d$, $2X_d$, $/X_d$ ou $/2X_d$. Cela revient à reporter l'incrémentation due à un signe opposé sur un autre produit partiel ayant un nombre de bits de poids faibles normalement à 0 plus important.

En pratique, en effet, la présence des bits $p_{d,j,0}$ à $p_{d,j,j-1}$ se traduit par la mise à la masse de façon permanente d'entrées d'additionneurs élémentaires du circuit de calcul. L'invention propose donc de modifier le câblage d'un circuit de calcul classique en fournissant à certaine de ses entrées d'additionneurs des signaux logiques représentatifs du signe d'un produit partiel comparativement au signe du multiplicande, cela ne modifiant de toute façon pas le temps de traversée de ces additionneurs.

Si il n'est pas possible de tenir compte de l'incrémentation dans un autre produit partiel (en pratique cela correspond au cas du produit partiel tel que j est le plus grand), il suffit de modifier le circuit d'addition recevant la série de signaux correspondant au dit produit partiel, et plus particulièrement toutes les entrées des additionneurs élémentaires recevant les signaux relatifs aux poids les plus faibles, qui sont normalement câblées à la masse.

Ainsi, avantageusement, des additionneurs élémentaires de l'ensemble des circuits d'addition reçoivent sur une de leurs entrées un des signaux de sélection.

L'invention permet donc de traiter les première et deuxième séries de signaux en utilisant un générateur de produits partiels sans incrémenteurs, comprenant un circuit de décalage à gauche produisant une troisième série de signaux par décalage à gauche de la première série de signaux, un circuit d'inversion produisant une quatrième et une cinquième séries de signaux par inversion de la première et de la troisième séries de signaux, un circuit de multiplexage recevant les première, troisième, quatrième, cinquième séries de signaux et une sixième série de signaux d'états logiques constants, ce circuit de multiplexage recevant également les signaux de sélection, et produisant, par l'action de ces signaux de sélection, des séries de signaux dérivés tels que chaque série de signaux dérivée est égale à l'une des cinq séries de signaux reçues par le circuit de multiplexage, un circuit d'extension de signe produisant des séries de signaux d'extension de signe, par l'action des signaux de sélection, et comprenant des circuits de concaténation pour produire les séries de signaux intermédiaires par concaténation d'une des séries de signaux dérivés et d'une des séries de signaux d'extension de signe.

Dans une version préférée les circuits d'addition forment une structure dite arbre de Wallace décrite dans la littérature (voir par exemple Wallace, C.S., "A suggestion for a fast multiplier", IEEE Trans. El. Computers, vol. EC-13, pp. 14-17, N°1, 1964) permettant de réduire le temps nécessaire à réaliser le traitement correspondant à l'addition des produits partiels $P''_{d,j}$ obtenus en les regroupant en ensembles de nombre impair, et en additionnant simultanément les produits partiels des différents ensembles à l'aide d'additionneurs élémentaires, par exemple du type à report bloqué ( ou Carry Save Adder).

A partir des produits partiels $P''_{d,j}$ générés par le décodage de Booth, on génère ainsi d'autres produits partiels en nombre inférieur (réduction des produits partiels) qui sont eux même additionnés jusqu'à ce qu'on se ramène à une addition finale de deux données de 2n bits. Ce type de structure parallèle est connue mais décrit pour l'emploi dans le cas d'opérations sur des produits partiels de même signe (c'est à dire du type classique $X_d * y_{d,i}$, sans bits d'extension de signe).

Par rapport à une structure régulière (addition en série des produits partiels avec propagation de retenue), la superficie totale du circuit est plus importante de l'ordre de 20%, mais le temps de traitement diminue de 20%.

L'invention sera mieux comprise et d'autres particularités et avantages apparaîtront dans la description ci-après d'un exemple de réalisation préféré et non limitatif, lue conjointement aux dessins annexés, dans lesquels :

- la figure 1 est un schéma synoptique d'un circuit logique de multiplication selon l'invention,
- la figure 2 est un schéma synoptique d'un circuit de formatage,
- la figure 3 est un schéma synoptique d'un circuit de décodage,
- la figure 4 est un schéma synoptique d'un circuit générateur de produits partiels,
- la figure 5 est un schéma synoptique d'un circuit de calcul et de formatage,
- la figure 6 est un schéma synoptique d'un circuit d'addition,
- la figure 7 est un schéma représentant symboliquement l'évolution d'un traitement dans le circuit de calcul et de formatage.

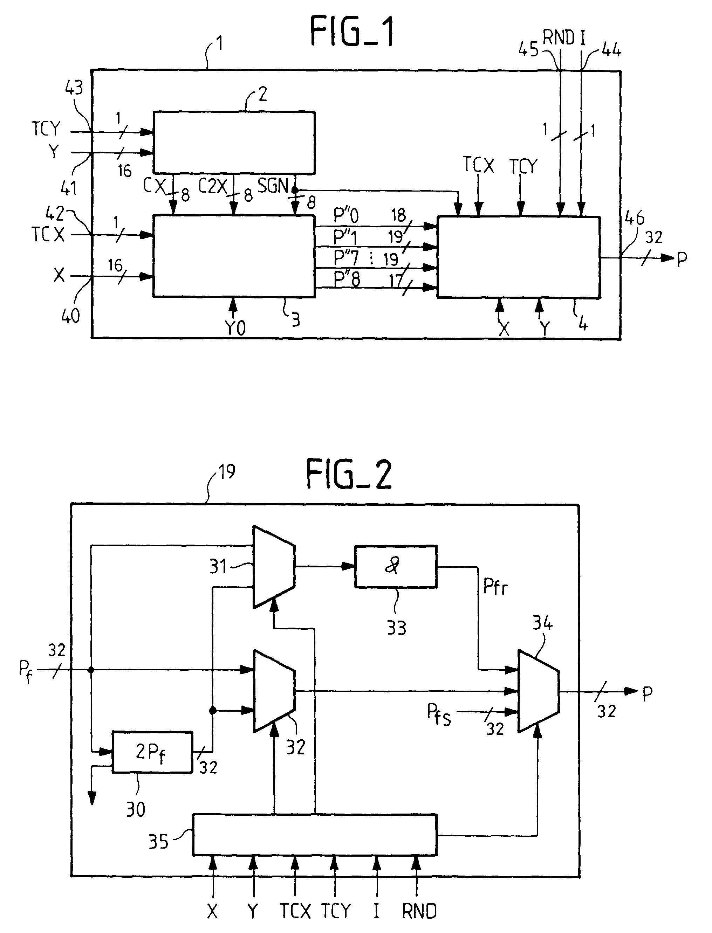

La figure 1 représente un circuit logique de multiplication 1. Ce circuit comprend :

- deux bornes d'entrée parallèle 40 et 41 pour recevoir une première et une deuxième séries de n signaux logiques $X = (X_{15}, X_{14},..., X_1, X_0)$ et $Y = (Y_{15}, Y_{14},..., Y_1, Y_0)$ représentatifs de deux données binaires, $X_d = (x_{d,15}, x_{d,14},..., x_{d,1}, x_{d,0})$ et $Y_d (y_{d,15}, y_{d,14},..., y_{d,1}, y_{d,0})$ codées sur n bits, n nombre entier (égal à seize dans l'exemple décrit),

- une borne de sortie parallèle 46 pour fournir une série $P = (P_{31}, P_{30},..., P_1, P_0)$ de trente-deux signaux logiques de sortie représentatifs d'une donnée binaire de sortie $P_d = (p_{d,31}, p_{d,30},..., p_{d,1}, p_{d,0})$ codée sur trente-deux bits, avec $P_d$ représentative du résultat de la multiplication logique $X_d * Y_d$,

- un décodeur de Booth 2 produisant trois séries notées CX, C2X et SGN de huit signaux logiques de sélection notés respectivement CX1 à CX8, C2X1 à C2X8, et SGN1 à SGN8,

- un générateur de produits partiels 3 produisant neuf séries de signaux logiques intermédiaires P"0 à P"8,

- un circuit de calcul et de formatage 4 recevant les séries de signaux intermédiaires et produisant la série de signaux de sortie P,

- quatre bornes d'entrée 42, 43, 44, 45 pour recevoir quatre signaux de commandes notés TCX, TCY, I et RND.

Un signal logique sera par exemple à 0 volts si il est représentatif d'un bit égal à 0, et à 3 (ou 5) volts si il est représentatif d'un bit égal à 1.

Dans l'exemple décrit, on considère un circuit délivrant un résultat de type entier ou fractionnel (I à l'état 1 ou 0), arrondi ou non (RND à l'état 1 ou 0) et signé ou non (TCX et/ou TCY à l'état 1 ou 0).

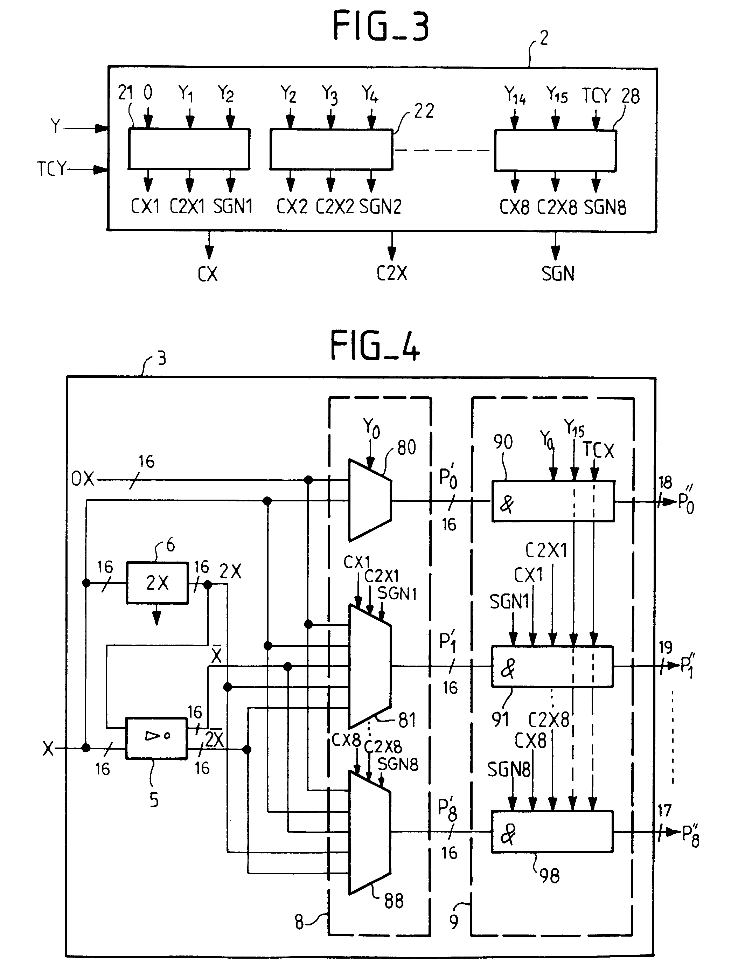

La figure 3 illustre le décodeur de Booth 2. Ce décodeur reçoit sur deux entrées la série de signaux Y et le signal TCY. Il fournit sur trois sorties les séries CX, C2X, et SGN. Il comporte huit cellules de décodage 21 à 28, non toutes représentées, à trois entrées et trois sorties.

Dans l'exemple décrit, on utilise la formule de décodage suivante :

$$Y_d = y_{d,0} * 2^0 + [(0 + Y_{d,j} - 2 * y_{d,j+1}) * 2^j]_{j=1} + \Sigma_j (y_{d,j-1} + Y_{d,j} - 2 * y_{d,j+1}) * 2^j,$$

j indice de 3 à 15.

Cela permet de considérer un multiplicateur codé en arithmétique signée ou non, tout en limitant le nombre de cellules de décodage à huit (= n/2), en considérant $y_{d,16} \equiv TCY$.

Les cellules 21 à 28 reçoivent respectivement sur leurs entrées les signaux 0 (potentiel d'une masse), $Y_1$ et $Y_2$ pour le première cellule 21, $Y_2$, $Y_3$ et $Y_4$ pour la deuxième cellule 22,..., $Y_{14}$, $Y_{15}$ et TCY pour la dernière cellule 28. Elles fournissent respectivement sur leurs sorties les signaux CX1, C2X1, et SGN1 pour la première cellule 21,..., CX8, C2X8 et SGN8 pour la dernière cellule 28, de telle manière que, pour j indice de 1 à 8 :

- $(CXj, C2Xj, SGNj) = (0, 0, 0)$ si les signaux reçus en entrée sont tous à l'état 0 ou tous à l'état 1,

- $(CXj, C2Xj, SGNj) = (1, 0, 0)$ si le premier ou le deuxième signal reçu en entrée est à l'état 1, et le troisième signal est à l'état 0,

- $(CXj, C2Xj, SGNj) = (1, 0, 1)$ si le troisième signal et le premier ou le deuxième signal reçu en entrée sont à l'état 1,

- $(CXj, C2Xj, SGNj) = (0, 1, 0)$ si les premier et deuxième signaux reçus en entrée sont à l'état 1, et le troisième signal est à l'état 0,

    $(CXj, C2Xj, SGNj) = (0, 1, 1)$ si le troisième signal reçu en entrée est à l'état 1 et les autres à l'état 0.

Fonctionnellement, on pourra considérer neuf cellules de décodage, le circuit 1 fonctionnant comme si on avait une neuvième cellule de décodage produisant des signaux de sélection (CX0, C2X0, SGN0), avec $(CX0, C2X0, SGN0) = (Y_0, 0, 0)$.

La figure 4 illustre le générateur de produits partiels 3.

Ce générateur 3 comprend :

- des entrées pour recevoir les séries X, CX, C2X, SGN, et les signaux $Y_0$ (qui joue dans ce circuit le rôle d'un signal de sélection) et TCX,

- un circuit de décalage à gauche 6 produisant une troisième série de seize signaux $2X = (X_{14}, X_{13},..., X_0, 0)$ par décalage à gauche de la première série de signaux X,

- un circuit d'inversion 5 produisant une quatrième et une cinquième séries de 16 signaux $/X = (/X_{15}, /X_{14},..., /X_1, /X_0)$ et $/2X = (/X_{14}, /X_{13},..., /X_0, 1)$ par inversion des première et troisième séries de signaux X et 2X (et réalisé pratiquement en plaçant deux séries de seize inverseurs en parallèle),

- un circuit de multiplexage 8 recevant les première, troisième, quatrième, cinquième, et une sixième série notée 0X de seize signaux d'états logiques constants 0, ce circuit de multiplexage recevant également les séries de signaux de sélection et le signal $Y_0$, et produisant, par l'action de ces signaux, neuf séries de seize signaux dérivées P'0 à P'8 telles que chaque série de signaux dérivée est égale à l'une des cinq séries de signaux (0X, X, /X, 2X, /2X) reçues par le circuit de multiplexage 8,

- un circuit d'extension de signe 9 produisant neuf séries de signaux d'extension de signe, par l'action des séries de signaux de sélection, et comprenant neuf circuits de concaténation 90 à 98, non tous représentés, pour produire les neuf séries de signaux intermédiaires P"0 à P"8 par concaténation d'une des neuf séries de signaux dérivés et une des neuf séries de signaux d'extension de signe.

Le circuit de décalage à gauche 6 est par exemple formé d'un registre parallèle à dix-sept entrées et dix-sept sorties recevant sur seize de ses entrées ($X_{15}$, $X_{14}$,..., $X_1$, $X_0$), et ayant sa dernière entrée connectée à une masse (état logique 0), et fournissant sur seize de ses sorties 2X, la sortie correspondant à l'entrée recevant $X_{15}$ étant inemployée. Pratiquement, le registre est virtuel, puisque tout se ramène à un problème de câblage.

Le circuit de multiplexage 8 comprend neuf multiplexeurs 80 à 88, non tous représentés.

Le premier multiplexeur 80 a une première et une deuxième entrées parallèles recevant respectivement les séries 0X et X, et une entrée de commande recevant le signal $Y_0$. Il fournit sur une sortie parallèle la série dérivée P'0 telle que la sortie est reliée à la première entrée si $Y_0$ est à l'état 0, et qu'elle est reliée à la seconde entrée si $Y_0$ est à l'état 1. En pratique, on pourra réaliser un circuit équivalent du point de vue fonctionnel en utilisant seize portes ET à deux entrées montées en parallèle, recevant chacune en entrée le signal $Y_0$ et un des signaux $X_0$ à $X_{15}$.

Les multiplexeurs 81 à 88 ont chacun :

- cinq entrées parallèles pour recevoir les séries 0X, X, /X, 2X, et /2X,
- trois entrées de commande pour recevoir respectivement les triplets de signaux (CX1, C2X1, SGN1) à (CX8, C2X8, SGN8), et
- une sortie parallèle pour fournir une série dérivée (P'1 = ($P'_{1,15}$,..., $P'_{1,0}$) à P'8 = ($P'_{8,15}$,..., $P'_{8,0}$)) reliée sélectivement à l'une de ses entrées suivant l'état des signaux de sélection reçues (l'entrée recevant la série 0X si le triplet de signaux de sélection est à l'état (0, 0, 0), l'entrée recevant la série X si le triplet est à l'état (1, 0, 0), l'entrée recevant /X si le triplet est à l'état (1, 0, 1), l'entrée recevant 2X si le triplet est à l'état (0, 1, 0), l'entrée recevant /2X si le triplet est à l'état (0, 1, 1)).

Les séries dérivées P'0 à P'8 sont représentatives de données binaires $P'_{d,0}$ à $P'_{d,8}$ telles que :

$$P'_{d,0} = X * y_{d,0} * 2^0,$$

$$P'_{d,1} = X * |y_{d,1} - 2 * y_{d,2}| * 2^1 = (0X \text{ ou } X \text{ ou}$$

$$2X) * 2, /X * |y_{d,1} - 2 * y_{d,2}| * 2^1 = /X * 2, \text{ ou } (/X *$$

$$|y_{d,1} - 2 * y_{d,2}| + 1) * 2^1 = /2X * 2,$$

$$P'_{d,2} = X * |y_{d,2} + y_{d,3} - 2 * y_{d,4}| * 2^3, /X *$$

$$|y_{d,2} + y_{d,3} - 2 * y_{d,4}| * 2^3, \text{ ou } (/X * |y_{d,2} + y_{d,3} - 2$$

$$* y_{d,4}| + 1) * 2^3,$$

$$....,$$

$$P'_{d,7} = X * |y_{d,12} + y_{d,13} - 2 * y_{d,14}| * 2^{13}, /X *$$

$$|y_{d,12} + y_{d,13} - 2 * y_{d,14}| * 2^{13}, \text{ ou } (/X * |y_{d,12} +$$

$$y_{d,13} - 2 * y_{d,14}| + 1) * 2^{13},$$

$$P'_{d,8} = X * |y_{d,14} + y_{d,15} - 2 * tcy| * 2^{15}, /X *$$

$$|y_{d,14} + y_{d,15} - 2 * tcy| * 2^{15}, \text{ ou } (/X * |y_{d,14} + y_{d,15} - 2 * tcy + 1) * 2^{15},$$

avec tcy = 0 si le signal TCY est à l'état 0 et tcy = 1 si TCY est à l'état 1.

Le circuit d'extension de signe 9 reçoit les séries dérivées P'0 à P'8, chaque série étant fournie à un circuit de concaténation (respectivement notés 90 à 98) qui reçoit par ailleurs les signaux $X_{15}$ et TCX, et respectivement les signaux $Y_0$ pour ce qui concerne le circuit 90 , et (CX1, C2X1, SGN1) à (CX8, C2X8, SGN8) pour ce qui concerne les circuits 91 à 98.

Les circuits de concaténation produisent chacun une série de signaux intermédiaires (notées P''0 à P''8), par concaténation d'une des séries de signaux dérivées et d'une série de signaux d'extension de signe, telles que :

- P''0 = (P''$_{0,17}$,..., P''$_{0,0}$) = (0, 1, P'$_{0,15}$,..., P'$_{0,0}$) si TCX = $Y_0$ = $X_{15}$ = 1, et P''0 = (1, 0, P'$_{0,15}$,..., P'$_{0,0}$) sinon,
- pour j indice de 1 à 7 :

$$P''j = (P''_{j,18},..., P''_{j,0}) = (0, 1, 1, P'_{j,15},..., P'_{j,0}) \text{ si } (CXj, C2Xj, SGNj) = (0, 0, 0),$$

$$P''j = (0, 1, 1, P'_{j,15},..., P'_{j,0}) \text{ si } (CXj, C2Xj, SGNj) = (1, 0, 0) \text{ et } TCX = 0,$$

$$P''j = (0, 1, 0, P'_{j,15},..., P'_{j,0}) \text{ si } (CXj, C2Xj, SGNj) = (1, 0, 1) \text{ et } TCX = 0,$$

$$P''j = (X_{15}, /X_{15}, /X_{15}, P'_{j,15},..., P'_{j,0}) \text{ si } (CXj, C2Xj, SGNj) = (0, 1, 0) \text{ et } TCX = 0,$$

$$P''j = (0, /X_{15}, X_{15}, P'_{j,15},..., P'_{j,0}) \text{ si } (CXj, C2Xj, SGNj) = (0, 1, 1) \text{ et } TCX = 0,$$

$$P''j = (0, 1, /X_{15}, P'_{j,15},..., P'_{j,0}) \text{ si } (CXj, C2Xj, SGNj) = (1, 0, 0) \text{ ou } (0, 1, 0), \text{ et } TCX = 1,$$

$$P''j = (0, 1, X_{15}, P'_{j,15},..., P'_{j,0}) \text{ si } (CXj, C2Xj, SGNj) = (1, 0, 1) \text{ ou } (0, 1, 1), \text{ et } TCX = 1.$$

- pour P''8 :

$$P''8 = (P''_{8,16},..., P''_{8,0}) = (1, P'_{8,15},..., P'_{8,0})$$

si
- (CX8, C2X8, SGN8) = (0, 0, 0), ou
- (CX8, C2X8, SGN8) = (1, 0, 0) et TCX = 0.

$$P''8 = (0, P'_{8,15},..., P'_{8,0}) \text{ si } (CX8, C2X8, SGN8) = (1, 0, 1) \text{ et } TCX = 0,$$

$$P''8 = (/X_{15}, P'_{8,15},..., P'_{8,0})$$

si
- (CX8, C2X8, SGN8) = (0, 1, 0) et TCX = 0, ou
- (CX8, C2X8, SGN8) = (1, 0, 0) ou (0, 1, 0), et TCX = 1.

$$P''8 = (X_{15}, P'_{8,15},..., P'_{8,0})$$

si
- (CX8, C2X8, SGN8) = (0, 1, 1) et TCX = 0, ou
- (CX8, C2X8, SGN8) = (1, 0, 1) ou (0, 1, 1), et TCX = 1.

Les séries intermédiaires sont représentatives de données binaires dites produits partiels, codées sur trente-deux bits. Chaque signal d'une série intermédiaire est représentatif d'un bit d'un poids donné d'un produit partiel. Les séries intermédiaires comprennent un nombre maximal de dix-neuf signaux, correspondants aux bits de valeur variable du produit partiel qu'elles représentent, les autres bits ayant une valeur constante égale à 0 (et n'intervenant donc pas dans le résultat de l'addition des produits partiels).

En ce qui concerne la série intermédiaire P''8, elle ne comporte qu'un seul signal de plus que la série P'8 du fait que cette dernière est représentative des bits de poids 15 à 30 d'une donnée binaire $P'_{d,8} = (0 * 2^{31}, X_{15} * ly_{d,14} + y_{d,15} - 2 * tcyl * 2^{30},..., X_0 * ly_{d,14} + y_{d,15} - 2 * tcyl * 2^{15}, 0 * 2^{14},..., 0 * 2^0), (0 * 2^{31}, /X_{15} * ly_{d,14} + y_{d,15} - 2 * tcyl * 2^{30},..., /X_0 * ly_{d,14} + y_{d,15} - 2 * tcyl * 2^{15}, 0 * 2^{14},..., 0 * 2^0)$, ou $(0 * 2^{31}, (/X_{15} * ly_{d,14} + y_{d,15} - 2 * tcyl + 1) * 2^{30},..., (/X_0 * ly_{d,14} + y_{d,15} - 2 * tcyl + 1) * 2^{15}, 0 * 2^{14},..., 0 * 2^0)$, si on considère les données binaires sur trente-deux bits.

Par rapport à un circuit de multiplication classique utilisant le décodage de Booth, le circuit 1 a l'avantage de limiter le nombre maximal de signaux d'extension de signe par série intermédiaire à trois. Sans réduire le nombre de signaux d'extension de signe tel que décrit ci-dessus, la série intermédiaire P''0 aurait compté trente-deux signaux (au lieu de dix-huit dans l'invention), la série P''1 aurait compté trente et un signaux (au lieu de dix-neuf dans l'invention), etc.

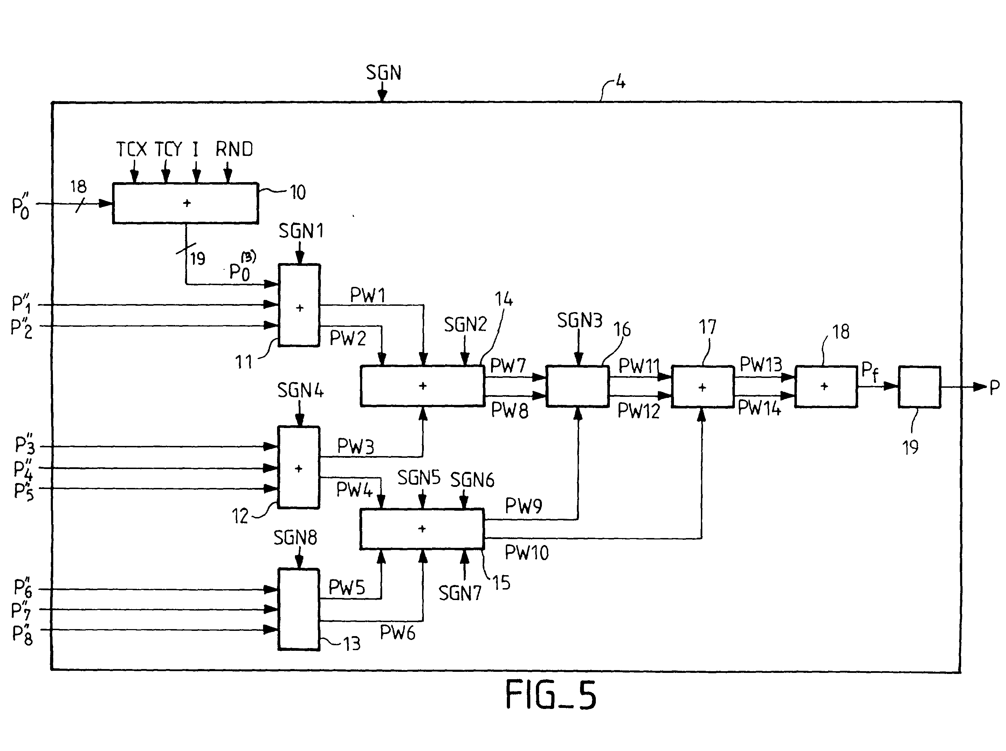

La figure 5 illustre le circuit de calcul et de formatage 4.

La circuit 4 reçoit :

- les signaux de commande TCX, TCY, I, RND,
- les premières et deuxième séries X et Y,
- les séries intermédiaires P''0 à P''8, et
- la série de signaux de sélection SGN.

Ce circuit comprend sept circuits d'addition 11 à 17 recevant trois séries de signaux d'entrée et produisant deux séries de signaux de sortie. Il comprend également un circuit d'addition finale 18 recevant deux séries de signaux d'entrée, et produisant une série de signaux de sortie. Les circuits d'addition sont composés d'additionneurs élémentaires montés en parallèle, ici de type à report bloqué (ou CSA, de Carry Save Adder) à trois entrées et deux sorties.

Chaque série de signaux d'entrée reçue par chaque circuit d'addition 12 à 18 est soit une des séries de signaux intermédiaires, soit une série de signaux de sortie produite par un autre circuit d'addition. Les circuits d'addition forment une structure parallèle dite arbre de Wallace.

Le circuit de calcul 4 comprend par ailleurs un circuit d'incrémentation 10 recevant en entrée la série intermédiaire $P''_0$, les signaux TCY, TCX, I, et RND. Ce circuit d'incrémentation 10 fournit sur une sortie une série de signaux d'entrée $P^{(3)}0$ telle que la série $P^{(3)}0$ comprend dix-neuf signaux $P^{(3)}_{0,18}$ à $P^{(3)}_{0,0}$ avec :

- $P^{(3)}_{0,j} = P''_{0,j}$ pour j de 0 à 13,
- si RND = 0 alors :

$$(P^{(3)}_{0,18}, P^{(3)}_{0,17}, P^{(3)}_{0,16}, P^{(3)}_{0,15}, P^{(3)}_{0,14}) = (0, P''_{0,17}, P''_{0,16}, P''_{0,15}, P''_{0,14}),$$

- si TCX = TCY = /I = RND = 1 alors :

$$(P^{(3)}_{0,18}, P^{(3)}_{0,17}, P^{(3)}_{0,16}, P^{(3)}_{0,15}, P^{(3)}_{0,14}) = (P''_{0,17}, P''_{0,16}, P''_{0,15}, P''_{0,14}) + (0, 0, 0, 1)$$

avec + l'addition binaire et $P^{(3)}_{0,18}$ la retenue de l'addition,
- si RND = 1 et I = 1 ou (TCX ou TCY = 0) alors :

$$(P^{(3)}_{0,18}, P^{(3)}_{0,17}, P^{(3)}_{0,16}, P^{(3)}_{0,15}, P^{(3)}_{0,14}) = (P''_{0,17}, P''_{0,16}, P''_{0,15}, P''_{0,14}) + (0, 0, 1, 0)$$

On suppose ici que l'on n'arrondit pas avec décalage le résultat de la multiplication si on considère des opérandes de type entier (I = 1).

Cet incrémenteur 10 a pour but, dans le cas où l'on souhaite un résultat de type arrondi, d'anticiper l'éventuelle incrémentation qu'entraîne habituellement le formatage de la série de sortie pour l'arrondir.

On remarque que la série de signaux reçue par le circuit d'incrémentation 10 est une des séries de signaux intermédiaires comprenant le nombre le plus faible de signaux d'une part, et dont les signaux sont représentatifs de bits ayant les poids les plus faibles, en représentation sur trente-deux bits, d'autre part.

Cela équivaut d'un point de vue arithmétique à limiter au minimum une propagation de retenue. Le circuit d'incrémentation 10 pourrait aussi recevoir en entrée une série de signaux de sortie produite par un des circuits d'addition. En pratique, au lieu d'implanter un circuit d'incrémentation sur seize bits dans le circuit de formatage on se limite à un circuit d'incrémentation sur quatre bits dans l'arbre de Wallace.

On remarquera d'autre part qu'il s'agit d'une incrémentation conditionnelle, puisqu'on suppose ici qu'il y a décalage à gauche ou non de la série finale produite par les circuits d'addition suivant que les opérandes sont signées ou non, en mode fractionnel.

Dans l'arbre de Wallace, afin de minimiser la taille du circuit, il est préférable de traiter dans chaque circuit d'addition des séries d'entrée correspondant à des regroupements voisins dans le décodage de Booth (c'est à dire représentatives de données binaires telles que, en appelant bits représentatifs de ces données leurs bits non identiquement à l'état 0, la différence entre le poids le plus faible et le poids le plus fort des bits de l'ensemble des bits représentatifs est la plus faible possible).

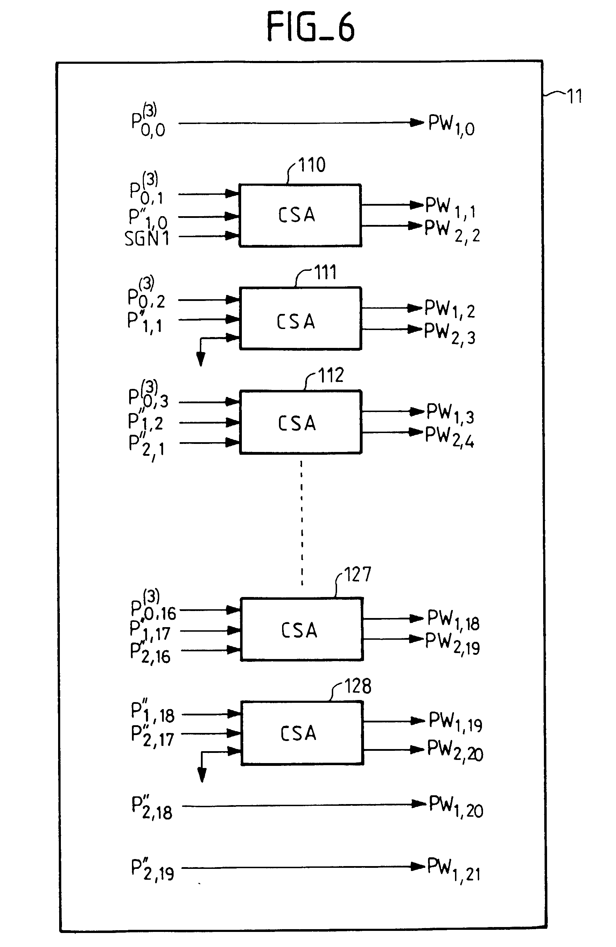

Ainsi, en considérant la formule de décodage $Y_d = y_{d,0} 2^0 + [(0 + y_{d,j} - 2 * y_{d,j+1}) * 2^j]_{j=1} + \Sigma_j (y_{d,j-1} + y_{d,j} - 2 * y_{d,j+1}) * 2^j$, la série $P^{(3)}0$ sera représentative d'une donnée codée sur dix-neuf bits représentatifs de poids 0 à 18, la série $P''1$ sera représentative d'une donnée codée sur dix-neuf bits représentatifs de poids 1 à 19, la série $P''2$ sera représentative d'une donnée codée sur dix-neuf bits représentatifs de poids 3 à 21, etc., et le circuit d'addition 11 (illustré figure 6) recevant ces trois séries en entrée comportera dix-neuf additionneurs élémentaires, puisque au moins deux de ces séries représentent des données codées sur des bits représentatifs de poids 1 à 19.

Pour ce qui concerne la réduction du nombre de séries intermédiaires, on choisira le type d'additionneur élémentaire en fonction du nombre de bits sur lesquels sont codées les opérandes dont la première et la deuxième séries sont représentatives. On pourra employer des additionneurs à trois entrées et deux sorties, cinq ou sept entrées et trois sorties etc., sachant que plus le type de CSA a d'entrées et de sorties, plus long est le temps pour le traverser. En pratique, si les opérandes $X_d$ et $Y_d$ sont codées sur seize bits on choisira de préférence une structure à base d'additionneurs à trois entrée et deux sorties qui implique quatre étapes de réduction :

- des neuf séries de signaux $P^{(3)}0$ et $P''1$ à $P''8$, à six séries de signaux PW1 à PW6 (circuits d'addition 11, 12, et 13),
- des six séries de signaux PW1 à PW6, à quatre séries de signaux PW7 à PW10 (circuits d'addition 14 et 15),
- de trois des quatre séries de signaux (PW7 à PW9), à deux séries de signaux PW11 et PW12 (circuit d'addition 16),
- des deux séries de signaux produites à l'étape précédente PW11 et PW12, et de la dernière des quatre séries de signaux produites à la deuxième étape (PW10), à deux séries de signaux PW13 et PW14 (circuit d'addition 17),
- de ces deux dernières séries PW13 et PW14, à une série de signaux finale Pf (circuit d'addition 18).

Chaque additionneur élémentaire à report bloqué reçoit trois signaux logiques A, B, D en entrée et fournit deux signaux logiques S et C en sortie tels que $S = A \wedge B \wedge D$, et $C = C(A, B, D) = (A.B) + D.(A \wedge B)$, avec + représentant un OU logique, $\wedge$ représentant un OU exclusif logique, et . représentant un ET logique.

Comme on l'a vu, les signaux des séries de signaux représentent des bits de poids différents de données binaires. De par le décodage choisi, les séries d'entrée des circuits d'addition seront en quelque sorte décalées les unes par rapport aux autres. Ainsi la série de signaux $P''1$ est formée de signaux représentatifs de bits de poids 1 à 19, la série de signaux $P''2$ est formée de signaux représentatifs de bits de poids 3 à 21, etc. et seule la série $P^{(3)}0$ comprend un signal représentatif d'un bit de poids 0.

De ce fait, les additionneurs élémentaires n'auront pas obligatoirement toutes leurs entrées qui recevront un signal d'une série de signaux d'entrée.

Ainsi le circuit d'addition 11, illustré figure 6 à titre d'exemple, reçoit en entrée :

- la série $P^{(3)} = (P^{(3)}_{0,18},..., P^{(3)}_{0,0})$,
- la série $P''1 = (P''_{1,19},..., P''_{1,0})$, et
- la série $P''2 = (P''_{2,19},..., P''_{2,0})$, et fournit deux séries de sortie $PW1 = (PW_{1,21},..., PW_{1,0})$ et $PW2 = (PW_{2,18},..., PW_{2,0})$.

Si on avait procédé à la complémentation à deux des produits partiels dans le générateur de produits partiels, on aurait eu :

$$PW_{1,0} = P^{(3)}_{0,0},$$

$$PW_{1,1} = P^{(3)}_{0,1} \wedge P''_{1,0} = P^{(3)}_{0,1} \wedge P''_{1,0} \wedge 0,$$

$$PW_{2,0} = C(P^{(3)}_{0,1}, P''_{1,0}, 0),$$

$$PW_{1,2} = P^{(3)}_{0,2} \wedge P''_{1,1} = P^{(3)}_{0,2} \wedge P''_{1,1} \wedge 0,$$

$$PW_{2,1} = C(P^{(3)}_{0,2}, P''_{1,1}, 0),$$

$$PW_{1,3} = P^{(3)}_{0,3} \wedge P''_{1,2} \wedge P''_{2,1},$$

$$PW_{2,2} = C(P^{(3)}_{0,3}, P''_{1,2}, P''_{2,1}),$$

etc.   avec $P^{(3)}0$, $P''1$, et $P''2$ formées à partir de séries $P'0$, $P'1$ et $P'2$ représentatifs de données binaires de la forme $+K * X_d * 2^i$ ou $-K * X_d * 2^i$, avec K entier naturel (K = 0, 1 ou 2 avec le décodage mis en ouvre dans l'invention). Cela impliquait la présence d'incrémenteurs dans le générateur de produits partiels pour produire des séries représentatives de $-K * X_d$.

Or, il apparait que les entrées des additionneurs élémentaires ne sont pas toutes utilisées pour recevoir un signal variable, les entrées non utilisées étant en pratique connectées à la masse.

Dans l'invention, on tire profit de cet état de fait pour reporter l'incrémentation dans les circuits d'addition. Ainsi, le circuit d'addition 11 reçoit le signal SGN1, représentatif du signe affecté à K d'après le décodage, de telle manière que l'on a :

- PW1 = $(PW_{1,21},..., PW_{1,0})$ = $(P''_{2,19}, P''_{2,18}, P''_{1,18} \wedge P''_{2,17}, P''_{1,17} \wedge P''_{2,16} \wedge P^{(3)}_{0,18},..., P^{(3)}_{0,3} \wedge P''_{1,2} \wedge P''_{2,1}, P^{(3)}_{0,2} \wedge P''_{1,1}, P^{(3)}_{0,1} \wedge P''_{1,0} \wedge$ **SGN1**, $P^{(3)}_{0,0}$), et
- PW2 = $(PW_{2,18},..., PW_{2,0})$ = $(C(P''_{1,18}, P''_{2,17}, 0), C(P''_{1,17}, P''_{2,16}, P^{(3)}_{0,18}),..., C(P^{(3)}_{0,3}, P''_{1,2}, P''_{2,1}), C(P^{(3)}_{0,2}, P''_{1,1}, 0), C(P^{(3)}_{0,1}, P''_{1,0}, $**SGN1**$)).$

Le circuit d'addition 11 comporte dix-neuf additionneurs 110 à 128, l'additionneur 110 recevant les signaux $P^{(3)}_{0,1}$, $P''_{1,0}$, et SGN1, et fournissant les signaux $PW_{1,1}$ et $PW_{2,2}$, etc.

On remarquera que, sans réduction du nombre des signaux d'extension de signe, le circuit d'addition 11 aurait comporté trente et un additionneurs élémentaires.

De même, suivant la disponibilité des entrées de leurs additionneurs, les circuits d'addition 12 à 16 recevront un ou plusieurs des signaux SGN2 à SGN8.

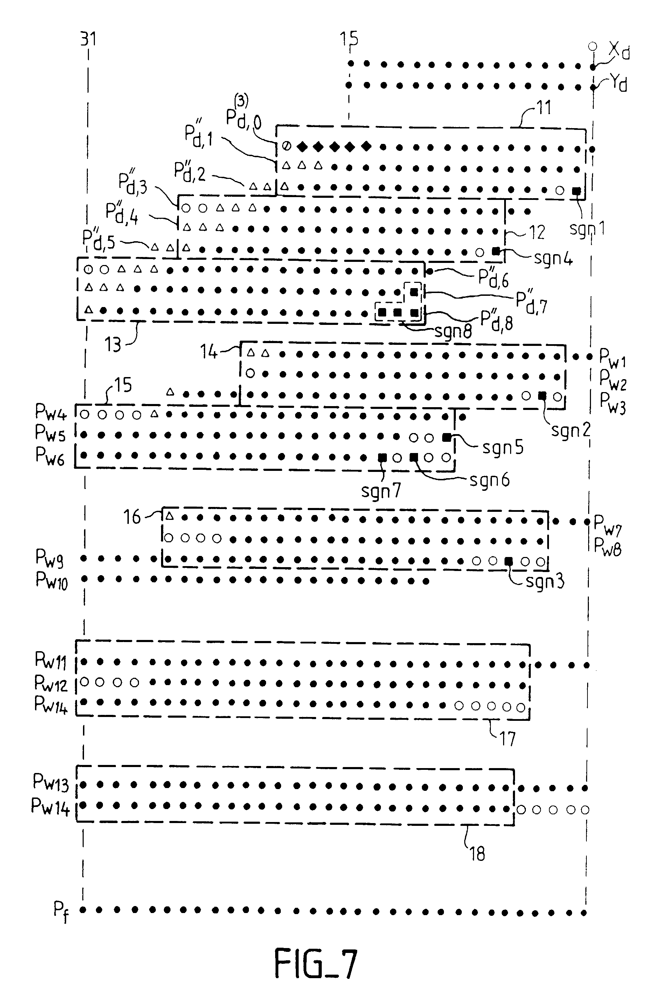

Pour ce qui concerne le reste des circuits d'addition il suffit, pour les réaliser, de se reporter à la figure 7 qui illustre les différentes étapes permettant de produire la série Pf de trente-deux signaux représentatives d'une donnée binaire égale à la somme des données binaires présentes en entrée des circuits d'addition, et dans laquelle :

- les points représentent des bits de valeur variable,
- les triangles représentent des bits d'extension de signe,
- les 0 représentent des bits de valeur 0,
- les losanges représentent les bits modifiés par l'incrémentation dans la fonction arrondie,
- les carrés représentent des bits sgn1 à sgn8 dont la valeur dépend de l'état des signaux de sélection SGN1 à SGN8,
- les rectangles délimités en trait hachurés et numérotés 11 à 18 montrent les bits dont les signaux représentatifs sont traités dans les additionneurs élémentaires des circuits d'additions, et dans quel circuit ces signaux sont traités.

On remarquera qu'en ce qui concerne le produit partiel $P''_{d,8}$, il n'est pas possible dans la structure décrite de procéder à une incrémentation éventuelle en fournissant le signal SGN8 à une seule entrée d'additionneur élémentaire. En effet, les signaux de $P''8$ sont représentatifs, parmi les différentes séries intermédiaires, des bits de poids les plus forts. On procédera, donc dans le cas de $P''8$, en fournissant SGN8 à l'ensemble des entrées d'additionneurs du circuit d'addition 13 recevant normalement un signal logique constant 0 (par connexion à la masse) représentatif de bits de poids les plus faibles.

Par ailleurs, on remarquera qu'en pratique, si les signaux sont représentatifs de bits de poids tels que ces signaux sont les seuls, parmi les signaux d'entrée reçus, qui soient représentatifs de bits de tels poids, alors ils ne seront pas traités dans des additionneurs, puisque $A \wedge 0 \wedge 0 = A$ et $(A.0) + 0.(A \wedge 0) = 0$. Ainsi, $P^{(3)}_{0,0}$, par exemple, se retrouvera tel quel dans la série Pf.

Dans l'exemple de réalisation décrit, on reporte l'incrémentation éventuelle des produits partiels dans l'arbre de Wallace en fournissant directement les signaux SGN1 à SGN8 à des entrées d'additionneurs. Il s'agit bien sûr d'un cas particulier, visant à faciliter la compréhension de l'invention. On aurait pu parler de façon plus générale de signaux d'incrémentation produits à partir des signaux de sélection. Mais, en décrivant le cas où on fournit directement les signaux de sélection à des entrées d'additionneurs, on lève une ambigüité possible découlant du fait que les signaux des séries de signaux intermédiaires dépendent des signaux de sélection.

Le point essentiel est de fournir des signaux représentatifs de l'incrémentation. On pourra très bien par exemple produire des signaux SGN1 à SGN8 dans les cellules de décodage tels qu'ils sont à l'état 1 si, représentativement, les produits partiels sont de même signe que le multiplicande, et à l'état 0 sinon, et inverser ultérieurement ces signaux avant de les fournir aux additionneurs.

En ce qui concerne le circuit d'addition 18, on n'aura pas intérêt à employer un additionneur série à propagation de retenue pour des raisons de rapidité, mais plutôt à employer un additionneur de type parallèle. On se tournera donc de préférence vers un additionneur à sélection de retenue ou de type Brent & Kung. Les additionneurs à sélection de retenue sont les moins encombrants. Les additionneurs de type Brent & Kung sont plus rapides mais aussi plus volumineux.

Le circuit d'addition 18 produit la série de trente-deux signaux $Pf = (Pf_{31}, Pf_{30},..., Pf_1, Pf_0)$. Cette série est fournie à un circuit de formatage 19 permettant de produire la série de sortie $P = (P_{32}, P_{30},..., P_1, P_0)$..

Ce circuit 19 comprend schématiquement :

- un circuit de décalage à gauche 30 analogue aux circuits 6 et 7 de la figure 3, et produisant une série $2Pf = (Pf_{30}, Pf_{29},..., Pf_0, 0)$,
- deux multiplexeurs 31 et 32, chacun à deux entrées, recevant chacun les séries Pf et 2Pf,
- un circuit de concaténation 33 recevant la série présente en sortie du multiplexeur 31 (Pf ou 2Pf) et produisant une série de 32 signaux $Pfr = (Pf_{31}, Pf_{30},.... pf_{15}, 0,..., 0)$ ou $(Pf_{30}, pf_{29},..., Pf_{14}, 0,..., 0)$,
- un multiplexeur 34 recevant sur trois entrées respectivement la série Pfr, la série (Pf ou 2Pf) présente en sortie du multiplexeur 32, et une série de 32 signaux $Pfs = (0, 1, 1,..., 1)$ dite de saturation, telle que classiquement $P = Pfs$ si $X = Y = (1, 0, 0,..., 0)$ en arithmétique fractionnelle avec opérandes signées $(TCX = TCY = /I = 1)$.
- un circuit logique de commande 35 recevant les séries X, Y, et les signaux TCX, TCY, I, RND, et fournissant des signaux de commande aux multiplexeurs 31, 32, et 34 du circuit de formatage en fonction du type de résultat souhaité (entier, fractionnel, arrondi, etc.).

Bien qu'on ait décrit l'invention en référence à un exemple de réalisation préféré, on comprendra que cet exemple n'est pas limitatif et que diverses variantes peuvent lui être apportées sans sortir du cadre de l'invention, telle que définie dans les revendications.

**Revendications**

1. Circuit logique de multiplication parallèle (1) recevant une première et une deuxième séries (X, Y) de n signaux logiques, représentatifs de deux données binaires, un multiplicande et un multiplicateur, codées sur n bits, n nombre entier, et produisant une série de 2 * n signaux logiques de sortie (P) représentatifs d'une donnée binaire de sortie codée sur 2 * n bits, comprenant

- un circuit (2) produisant des signaux logiques de sélection (CX1 à CX8, C2X1 à C2X8, SGN1 à SGN8) à partir de la deuxième série de signaux (Y),
- un générateur de produits partiels (3) produisant des séries de signaux logiques intermédiaires (P"0 à P"8) par combinaison de la première série de signaux (X) et des signaux de sélection (CX1 à CX8, C2X1 à C2X8, SGN1 à SGN8),
- un circuit de calcul et de formatage (4) recevant les séries de signaux intermédiaires (P"0 à P"8) et produisant la série de signaux de sortie (P),

et comprenant des circuits d'addition (11 à 18) recevant des séries de signaux d'entrée (P(3), P"1 à P"8, PW1 à PW14) et produisant des séries de signaux de sortie (PW1 à PW12), les circuits d'addition (11 à 18) étant composés d'additionneurs élémentaires (110 à 128) à plusieurs entrées montés en parallèle, les circuits d'addition (11 à 13) formant une structure de type arbre de Wallace ; caractérisé en ce que le circuit de calcul et de formatage (4) comporte:

- un circuit d'incrémentation (10) modifiant une des séries de signaux d'entrée ($P^{(3)}0$) par l'addition anticipée d'un bit d'arrondi, afin de limiter une propagation de retenue, le bit d'arrondi étant positionné en fonction de signaux de commande (TCX, TCY, I, RND) représentatifs des formats des première et deuxième séries (X et Y) et de la série de signaux logiques de sortie (P).

2. Circuit selon la revendication 1, caractérisé en ce que la série de signaux d'entrée (P"0) qui est modifiée par le circuit d'incrémentation (10) est une des séries de signaux intermédiaires.

3. Circuit selon la revendication 2, caractérisé en ce que la série de signaux d'entrée qui a été modifiée par le circuit d'incrémentation est une série de signaux intermédiaires obtenue à partir de la combinaison de la première série (X) de signaux logiques et d'un signal de la deuxième série (Y) de signaux logiques.

4. Circuit selon la revendication 1, caractérisé en ce que la série de signaux d'entrée qui est modifiée par le circuit d'incrémentation est une des séries de signaux de sortie produites par les circuits d'addition.

5. Circuit selon l'une des revendications 1 à 4, caractérisé en ce que des additionneurs élémentaires de l'ensemble des circuits d'addition reçoivent sur une de leurs entrées un des signaux de sélection (SGN1 à SGN8).

6. Circuit selon l'une des revendications 1 à 5, caractérisé en ce que le circuit (4) produisant les signaux logiques de sélection est un décodeur de Booth.

7. Circuit selon l'une des revendications 1 à 6, caractérisé en ce que le générateur de produits partiels comprend :

- un circuit de décalage à gauche (6) produisant une troisième série de signaux (2X) par décalage à gauche de la première série de signaux (X),
- un circuit d'inversion (5) produisant une quatrième et une cinquième séries de signaux (/X, /2X) par inversion de la première et de la troisième séries de signaux (X, 2X),
- un circuit de multiplexage (8) recevant les première, troisième, quatrième, cinquième, et une sixième série de signaux d'états logiques constants (0X) , ce circuit de multiplexage recevant également les signaux de sélection, et produisant, par l'action de ces signaux de sélection, des séries de signaux dérivés tels que chaque série de signaux dérivée est égale à l'une des cinq séries de signaux reçues par le circuit de multiplexage,
- un circuit d'extension de signe (9) produisant des séries de signaux d'extension de signe, par l'action des signaux de sélection, et comprenant des circuit de concaténation (90 à 98) pour produire les séries de signaux intermédiaires par concaténation d'une des séries de signaux dérivés et d'une des séries de signaux d'extension de signe.

**Patentansprüche**

1. Logikschaltung (1) zur parallelen Multiplikation, die eine erste und eine zweite Folge (X, Y) von n logischen Signalen empfängt, die für zwei binäre Datenwerte, nämlich einen Multiplikand und einen Multiplikator, repräsentativ sind, die mit n Bits kodiert sind, wobei n eine ganze Zahl ist, und die eine Folge von 2 * n logischen Ausgangssignalen (P) erzeugt, die für einen binären Ausgangs-Datenwert repräsentativ sind, der mit 2 * n Bits kodiert ist, wobei die Schaltung aufweist

- eine Schaltung (2), die logische Auswahlsignale (CX1 bis CX8, C2X1 bis C2X8, SGN1 bis SGN8) ausgehend von der zweiten Folge von Signalen (Y) erzeugt,
- einen Generator (3) von Teilprodukten, der Folgen von logischen Zwischensignalen (P"0 bis P"8) durch Kombination der ersten Folge von Signalen (X) und der Auswahlsignale (CX1 bis CX8, C2X1 bis C2X8, SGN1 bis SGN8) erzeugt,
- eine Rechen- und Formatierschaltung (4), die die Folgen von Zwischensignalen (P"0 bis P"8) empfängt und die Folge von Ausgangssignalen (P) erzeugt,
- und Additionsschaltungen (11 bis 18) aufweist, die Folgen von Eingangssignalen (P(3), P"1 bis P"8, PW1 bis PW14) empfangen und Folgen von Ausgangssignalen (PW1 bis PW12) erzeugen, wobei die Additionsschaltungen (11 bis 18) aus parallelgeschalteten elementaren Addierern (110 bis 128) mit mehreren Eingängen bestehen, wobei die Additionsschaltungen (11 bis 13) eine Struktur vom Typ eines Wallace-Baums bilden, dadurch gekennzeichnet, daß die Rechen- und Formatierschaltung (4) aufweist:
- eine Inkrementierschaltung (10), die eine der Folgen der Eingangssignale ($P^{(3)}0$) durch vorweggenommene

Addition eines Rundungs-Bits verändert, um eine Übertrags-Fortpflanzung zu begrenzen, wobei das Rundungs-Bit in Abhängigkeit von Steuersignalen (TCX, TCY, I, RND) positioniert ist, die für die Formate der ersten und der zweiten Folge (X und Y) und der Folge von logischen Ausgangssignalen (P) repräsentativ sind.

2. Schaltung nach Anspruch 1, dadurch gekennzeichnet, daß die Folge von Eingangssignalen (P"0), die von der Inkrementierschaltung (10) verändert wird, eine der Folgen von Zwischensignalen ist.

3. Schaltung nach Anspruch 2, dadurch gekennzeichnet, daß die Folge von Eingangssignalen, die von der Inkrementierschaltung verändert wurde, eine Folge von Zwischensignalen ist, die ausgehend von der Kombination der ersten Folge (X) von logischen Signalen und eines Signals der zweiten Folge (Y) von logischen Signalen erhalten wurde.

4. Schaltung nach Anspruch 1, dadurch gekennzeichnet, daß die Folge von Eingangssignalen, die von der Inkrementierschaltung verändert wird, eine der Folgen von Ausgangssignalen ist, die von den Additionsschaltungen erzeugt wurden.

5. Schaltung nach einem der Ansprüche 1 bis 4, dadurch gekennzeichnet, daß elementare Addierer der Einheit von Additionsschaltungen an einem ihrer Eingänge eines der Auswahlsignale (SGN1 bis SGN8) empfangen.

6. Schaltung nach einem der Ansprüche 1 bis 5, dadurch gekennzeichnet, daß die Schaltung (4), die die logischen Auswahlsignale erzeugt, ein Booth-Dekodierer ist.

7. Schaltung nach einem der Ansprüche 1 bis 6, dadurch gekennzeichnet, daß der Generator von Teilprodukten aufweist:

   - eine Schaltung (6) zur Verschiebung nach links, die eine dritte Folge von Signalen (2X) durch Linksverschiebung der ersten Folge von Signalen (X) erzeugt,
   - eine Umkehrschaltung (5), die eine vierte und eine fünfte Folge von Signalen (/X, /2X) durch Umkehr der ersten und der dritten Folge von Signalen (X, 2X) erzeugt,
   - eine Multiplexierschaltung (8), die die erste, dritte, vierte, fünfte und eine sechste Folge von Signalen konstanter logischer Zustände (0X) empfängt, wobei diese Multiplexierschaltung ebenfalls die Auswahlsignale empfängt und durch Einwirkung dieser Auswahlsignale derartige Folgen abgeleiteter Signale erzeugt, daß jede abgeleitete Folge von Signalen gleich einer der fünf Signalfolgen ist, die von der Multiplexierschaltung empfangen werden,
   - eine Vorzeichen-Erweiterungs-Schaltung (9), die durch Einwirkung der Auswahlsignale Folgen von Vorzeichen-Erweiterungs-Signalen erzeugt und die Verkettungsschaltungen (90 bis 98) enthält, um die Folgen von Zwischensignalen durch Verkettung einer der Folgen von abgeleiteten Signalen mit einer der Folgen von Vorzeichen-Erweiterungs-Signalen zu erzeugen.

## Claims

1. Parallel multiplication logic circuit (1) receiving first and second series (X, Y) of n logic signals, representing two binary data items, a multiplicand and a multiplier, coded in n bits, n being an integer number, and producing a series of 2 * n logic output signals (P) representing an output binary data item coded in 2 * n bits, comprising

   - a circuit (2) producing logic selection signals (CX1 to CX8, C2X1 to C2X8, SGN1 to SGN8) from the second series of signals (Y),

   - a partial product generator (3) producing series of intermediate logic signals (P"0 to P"8) by combining the first series of signals (X) and selection signals (CX1 to CX8, C2X1 to C2X8, SGN1 to SGN8),

   - a calculation and formatting circuit (4) receiving the series of intermediate signals (P"0 to P"8) and producing the series of output signals (P),

   and comprising addition circuits (11 to 18) receiving series of input signals (P(3), P"1 to P"8, PW1 to PW14) and producing series of output signals (PW1 to PW12), the addition circuits (11 to 18) being composed of elementary adders (110 to 128) with several inputs connected in parallel, the addition circuits (11 to 13) forming a structure of the Wallace tree type;

characterised in that the calculation and formatting circuit (4) includes:

- an incrementation circuit (10) modifying one of the series of input signals ($P^{(3)}0$) by the anticipated addition of a rounding bit, in order to limit a carry propagation, the rounding bit being positioned according to control signals (TCX, TXY, I, RND) representing the formats of the first and second series (X and Y) and of the series of logic output signals (P).

2. Circuit according to Claim 1, characterised in that the series of input signals (P"0) which is modified by the incrementation circuit (10) is one of the series of intermediate signals.

3. Circuit according to Claim 2, characterised in that the series of input signals which was modified by the incrementation circuit is a series of intermediate signals obtained from combining the first series (X) of logic signals and a signal in the second series (Y) of logic signals.

4. Circuit according to Claim 1, characterised in that the series of input signals which is modified by the incrementation circuit is one of the series of output signals produced by the addition circuits.

5. Circuit according to one of Claims 1 to 4, characterised in that elementary adders of the set of addition circuit receive, at one of their inputs, one of the selection signals (SGN1 to SGN8).

6. Circuit according to one of Claims 1 to 5, characterised in that the circuit (4) producing the logic selection signals is a Booth decoder.

7. Circuit according to one of Claims 1 to 6, characterised in that the partial product generator comprises:

- a circuit for shifting to the left (6) producing a third series of signals (2X) by shifting the first series of signals (X) to the left,

- a reversing circuit (5) producing fourth and fifth series of signals (/X, /2X) by reversing the first and third series of signals (X, 2X),

- a multiplexing circuit (8) receiving first, third, fourth, fifth and sixth series of constant logic state signals (0X), this multiplexing circuit also receiving the selection signals, and producing, through the action of these selection signals, series of derived signals such that each series of derived signals is equal to one of the five series of signals received by the multiplexing circuit,

- a sign extension circuit (9) producing series of sign extension signals, through the action of the selection signals, and comprising concatenation circuits (90 to 98) for producing the series of intermediate signals through the concatenation of one of the series of derived signals and one of the series of sign extension signals.

# FIG_1

# FIG_2

FIG_3

FIG_4

FIG_5

# FIG_6

FIG_7